# EUROPÄISCHE PATENTSCHRIFT

(11) **EP 1 744 066 B1**
(45) Veröffentlichungstag und Bekanntmachung des Hinweises auf die Patenterteilung: **03.02.2010**
(21) Anmeldenummer: 05106518.3
(22) Anmeldetag: 15.07.2005
(51) Int. Cl.: F16B 7/18

(54) **Fachwerk sowie Stäbe für ein Fachwerk**
Framework as well as rods for a framework
Cadre aussi bien que des tiges pour un cadre

(43) Veröffentlichungstag der Anmeldung: 17.01.2007
(73) Patentinhaber: LIPP-BÜHLER, Peter, 4418 Reigoldswil (CH)
(72) Erfinder: LIPP-BÜHLER, Peter, 4418 Reigoldswil (CH)
(74) Vertreter: Hepp, Dieter

(56) Entgegenhaltungen:
- WO-A-01/51721
- FR-A- 2 564 910
- GB-A- 1 397 824
- US-A- 4 092 076

## Beschreibung

Die Erfindung betrifft ein Fachwerk gemäss dem Oberbegriff von Anspruch 1. Als Grundstruktur für Gebäude werden häufig Fachwerke in Holzbauweise ausgewählt. Solche Fachwerke bestehen im Wesentlichen aus stabförmigen Elementen aus Holz, wobei der Verbindungsbereich der Stäbe Knoten genannt wird.

Es sind bereits zahlreiche Fachwerke bekannt und gebräuchlich. So beschreibt beispielsweise die DE 83 22 539 U1 ein Fachwerk mit Stäben (bzw. Zargen) aus Holz und diese stirnseitig verbindenden, etwa würfelförmigen Knotenstücken. Pro Knoten ist jeweils ein Knotenstück vorgesehen. In der Praxis hat sich gezeigt, dass einem solchen Fachwerk hinsichtlich statischer Belastbarkeit Grenzen gesetzt sind. Insbesondere wäre es für grössere, insbesondere mehrstöckige Gebäude wenig geeignet.

Die DE 83 22 539 U1 selbst beschreibt eine Verbindungsanordnung, mit deren Hilfe die Stäbe mit den Knotenstücken verbunden werden. Dazu wird am Ende des Stabes ein Keilbolzen eingesetzt, der axial in diesem in Längsrichtung verschiebbar geführt ist. Für die Montage ist ein Durchbruch im Stab vorgesehen, durch den ein Montagewerkzeug radial in den Keilbolzen einsteckbar ist. Dieser Keilbolzen ist verhältnismässig kompliziert ausgestaltet und entsprechend teuer. Die Montage des Fachwerks kann nur mit speziellen Montagewerkzeugen erfolgen.

Aus der FR 2 564 910 A ist ein Fachwerk bekannt geworden, bei dem in einem Knoten ein metallischer Holkörper mit einer würfelförmigen Aussenkonfiguration als Verbindungsteil vorgesehen ist. An die Würfelseiten stossen stirnseitig die Enden von Stäben aus Holz an. Dabei sind die Stäbe je Würfelseite mittels einer oder zwei Befestigungsschrauben mit dem Verbindungsteil verbunden.

Die US 4,092,076 zeigt ein Fachwerk mit durchgehend verlaufenden, vertikalen Stützen und horizontalen Trägern. Bei einer Anordnung mit je vier Trägern sind jeweils zwei einander gegenüber liegende Träger durch Stifte miteinander verbunden, die durch die Stützen geführt sind. Bei einer Anordnung mit je sechs Trägern weisen zwei der sechs Träger einseitig in die entsprechende Träger eingeführte Stifte auf, wobei sie mit Schraubenmuttern gesichert sind. Die Träger sind als I-förmige Profile ausgebildet, wobei jeder der Gurten Bohrungen zur Aufnahme der Stifte aufweist.

Es ist deshalb eine Aufgabe der vorliegenden Erfindung, die Nachteile des Bekannten zu vermeiden, insbesondere ein Fachwerk der eingangs genannten Art zu schaffen, das sich durch eine hohe statische Stabilität und Belastbarkeit auszeichnet. Das Fachwerk soll weiter auf einfache Art und Weise aufgestellt und montiert sowie demontiert werden können. Insbesondere sollen auch die einzelnen Komponenten des Fachwerks, insbesondere die metallischen Komponenten, einfach herstellbar sein und bevorzugt einen einfachen Aufbau aufweisen. Diese Aufgaben werden erfindungsgemäss mit einem Fachwerk gelöst, das die Merkmale in Anspruch 1 aufweist.

Durch die Anordnung von wenigstens zwei Verbindungsteilen pro Knoten können statisch stabile Fachwerke erstellt werden. Insbesondere können so Stäbe verwendet werden, die im Querschnitt eine abgeflachte Konfiguration aufweisen (grössere Höhe als Breite). Stäbe aus Holz und/oder Holzfaserwerkstoffen eignen sich durch ihr geringes Eigengewicht auch für weitgespannte Konstruktionen. Die Erfindung ist grundsätzlich auf ein Fachwerk in Holzbauweise gerichtet. Selbstverständlich ist es aber auch vorstellbar, die Stäbe - anstatt aus Holz und/oder Holzfaserwerkstoffen - aus Faserverbundwerkstoffen herzustellen.

Im Bereich der Enden des Stabes können für die Befestigungsmittel Montageöffnungen vorgesehen sein, die in einem Abstand von der Anschlagfläche zum Anschlagen der Verbindungsteile angeordnet sind. Dadurch wären die Befestigungsmittel auf einfache Art und Weise durch die Montageöffnung einführbar und/oder mittels eines Montagewerkzeugs beaufschlagbar. Derartige Montageöffnungen erleichtern sowohl den Aufbau als auch einen allfälligen Abbau des Fachwerks wesentlich.

Das Befestigungsmittel ist eine Schraubverbindung. Die Schraubverbindung kann dabei Schrauben mit einem Schraubenschaft und einem Schraubenkopf enthalten. Besonders geeignet dazu sind handelsübliche Schrauben, die einfach und in grosser Zahl zu günstigen Preisen auf dem Markt erhältlich sind. Auf diese Weise können die Baukosten für die Bauten erheblich reduziert werden.

Zwischen Anschlagfläche und Montageöffnung kann eine Durchgangsbohrung zur Aufnahme des Schraubenschaftes der Schraube angeordnet sein. Die Montageöffnung ist deshalb bevorzugt eine in Richtung der Durchgangsbohrung verlaufende längliche Aussparung. Diese Anordnung kann auf einfache Art und Weise mit Hilfe von herkömmlichen Fräs- und/oder Bohrvorrichtungen hergestellt werden.

Die Stäbe sind im Querschnitt I-förmige Profile mit einem Steg und zwei Gurten. Solche Stäbe zeichnen sich durch besonders günstige statische Eigenschaften aus.

Das Fachwerk besteht im Wesentlichen aus vertikal verlaufenden Stützen und horizontal verlaufenden Trägern. Bei Stäben für Träger verläuft die Anschlagfläche für das Verbindungsteil rechtwinklig zur Längsrichtung des Stabes. Somit sind diese Stäbe stirnseitig durch die Verbindungsteile miteinander verbindbar. Für die als Stützen vorgesehenen Stäbe wird die Anschlagsfläche für das Verbindungsteil durch eine in Längsrichtung des Stabes verlaufende Flankenfläche gebildet. Somit würden die Durchgangsbohrungen und zugehörigen Montageöffnungen quer bzw. rechtwinklig zur Längsrichtung des Stabes verlaufen. Die Flankenfläche ist dabei im Bereich wenigstens eines Endes des Stabes angeordnet. Für bestimmte Einsatzzwecke kann es vorteilhaft sein, wenn beide Enden des Stabes solche Flankenflächen für Verbindungsteile aufweisen. Für eine vorteilhafte Verbindung von Stützen miteinander kann es vorteilhaft sein, wenn wenigstens einer der dazu vorgesehenen Stäbe im Bereich eines der Enden Flankenflächen für die Verbindungsteile (Durchgangsbohrung und Montageöffnung verlaufen quer bzw. rechtwinklig zur Längsrichtung des Stabes) und im Bereich des anderen Endes des Stabes Stirnflächen für die Verbindungsteile (d. h. Durchgangsbohrung und Montageöffnung verlaufen in Längsrichtung) aufweist.

Ein Knoten aus Trägern weist zwei Verbindungsteile auf. Je ein Verbindungsteil ist dabei jeweils im Bereich des Gurtes positioniert . Ein derartiges Fachwerk zeichnet sich durch eine schlanke Konstruktion aus und weist besonders günstige statische Eigenschaften auf.

Ein Knoten von Trägern und Stützen kann vier Verbindungsteile aufweisen. Dabei können jeweils zwei Verbindungsteile an je einer der beiden Flankenflächen der Stäbe für die Stützen angeordnet sein. Solche Flankenflächen, an welchen die Verbindungsteile angeordnet werden, können wie vorgängig beschrieben entweder nur im Bereich eines der Enden des Stabes für die Stütze oder im Bereich beider Enden des Stabes für die Stütze vorgesehen sein.

Das Verbindungsteil ist würfelförmig ausgebildet. Dabei kann auf jeder Seite des Verbindungsteils eine Gewindebohrung zur Aufnahme einer Schraube vorgesehen sein. Somit können die Stäbe besonders einfach miteinander verbunden werden. Ein solcher Verbindungswürfel könnte beispielsweise auf einfache Art und Weise aus Stahl, insbesondere Edelstahl hergestellt werden.

Zur weiteren Stabilisierung des Fachwerks kann es vorteilhaft sein, wenn zwischen zwei Verbindungsteilen in einem Knoten ein Versteifungselement aus Metall vorgesehen ist. Im Falle eines Knotens von Trägern und Stützen, bei welchen vier Verbindungsteile vorgesehen sind, wären die Versteifungselemente jeweils an einer der Flankenflächen der als Stützen vorgesehenen Stäbe angeordnet. Diese Versteifungselemente sollen insbesondere zur Aufnahme von Scherkräften dienen.

Zur Aufnahme der Scherkräfte kann das Versteifungselement wenigstens eine umlaufende Schulter aufweisen, die formschlüssig in eine korrespondierende Aussparung in den angrenzenden Stäben eingreift. Eine derartige Aussparung kann eine Nut sein, die je nach Verwendungszweck des Stabes entweder im Bereich der Stirnfläche oder im Bereich der Flankenflächen am Ende des Stabes angeordnet ist.

In einer vorteilhaften Ausführungsform kann das Versteifungselement im Wesentlichen aus einem quaderförmigen Grundkörper und stirnseitig an diesem angeordneten Platten bestehen. Diese Platten bilden Schultern für den Formschluss mit den Stäben. Die Platten und/oder der Grundkörper können in der Draufsicht quadratisch ausgebildet sein. Dabei wäre es vorteilhaft, wenn der Grundkörper und die Platten eine gemeinsame Achse aufweisen würde.

Die Stäbe sind vorzugsweise vorgefertigt und erlauben die rationelle Herstellung der vielfältigsten Bauform von Fachwerken.

Der Stab kann für Träger Durchgangsbohrungen und zugehörigen Montageöffnungen aufweisen, die in Längsrichtung verlaufen und die jeweils einem Gurt zugeordnet sind. Der Stab für die Stütze kann Durchgangslöcher und zugehörige Montageöffnungen an wenigstens einem Ende des Stabes aufweisen, die quer bzw. senkrecht zur Längsrichtung verlaufen. Je nach Einsatzzweck können quer verlaufende Durchgangslöcher und Montageöffnungen an beiden Enden des Stabes angeordnet sein. Stäbe für Stützen können aber auch an einem Ende nur quer und am andern Ende nur längs verlaufende Durchgangslöcher und Montageöffnungen aufweisen. Somit würde ein Bausatz für ein Fachwerk vorteilhaft die vorgängig genannten drei Typen von Stäben aufweisen. Solche Profile können kostengünstig hergestellt werden.

Das Profil für den Stab kann aus mehreren miteinander verleimten Schichten bestehen. Die Schichten können aus verschiedenen Holzarten oder Holzfaserwerkstoffen zusammengesetzt sein. Durch entsprechende Wahl der Schichten können die Eigenschaften der Stäbe je nach Einsatz- und Anwendungszweck optimiert werden.

Vorteilhaft ist es, wenn auf jeder Seite im Bereich der Gurte eine Leiste angeordnet ist. Auf diese Weise kann besonders einfach ein I-förmiges Profil gebildet werden.

Besonders vorteilhaft ist es, wenn das Brett aus Sperrholz oder Schichtholz besteht und die Leisten aus Massivholz, insbesondere aus Eschenholz oder einer anderen hochbiegsamen und tragfähigen Holzart bestehen. Ein solcher Stab hat verschiedene Vorteile. So zeichnet er sich durch besonders günstige statische Eigenschaften aus. Weiter weist er ein günstiges Schwindverhalten auf. Sodann ist das Profil maschinell einfach bearbeitbar.

Am Ende des Stabes kann dieser in der Draufsicht auf jeder Seite eine Gehrungsfläche aufweisen. Die Gehrung hat den Vorteil, dass bei einer bestimmten Profildicke, insbesondere im Bereich der Gurte, verhältnismässig kleine Verbindungsteile und eventuell auch entsprechend kleine Versteifungselemente verwendet werden können.

Zur Gewichtsreduktion können im Bereich des Stegs Durchbrüche vorgesehen sein, die in einer in Längsrichtung verlaufenden Reihe angeordnet sind. Diese können vorzugsweise kreisförmig ausgestaltet sein.

Weitere Einzelmerkmale und Vorteile der Erfindung ergeben sich aus der nachfolgenden Beschreibung der Ausführungsbeispiele und aus den Zeichnungen. Es zeigen:
- Fig. 1: eine Seitenansicht eines erfindungsgemässen Fachwerks,
- Fig. 2: eine Draufsicht auf das Fachwerk gemäss Fig. 1,
- Fig. 3: einen Stab für ein Fachwerk zur Verwendung als Träger,
- Fig. 3a und 3b: eine Stirnansicht/Draufsicht auf den Stab gemäss Fig. 3
- Fig. 4: einen Profilquerschnitt durch den Stab gemäss Fig. 3 (Schnitt B-B),
- Fig. 5: einen Profilquerschnitt durch den Stab gemäss Fig. 3 (Schnitt C-C),
- Fig. 6: eine Draufsicht auf einen Knoten aus Trägern,
- Fig. 7: ein Verbindungsteil für ein Fachwerk,
- Fig. 8: eine perspektivische Explosionsdarstellung eines Endes eines Stabes mit zugehörigen Verbindungsteilen und Versteifungselementen,
- Fig. 9: eine Ansicht eines Endes eines Stabes zur Verwendung als Stütze,
- Fig. 9a: eine Draufsicht des Stabes gemäss Fig. 9
- Fig. 10: den Stab gemäss Fig. 9 mit Verbindungsteilen und Versteifungselementen,
- Fig. 10a: eine Draufsicht auf den Stab gemäss Fig. 10,
- Fig. 11: eine vergrösserte Darstellung des Versteifungselements aus Fig. 10 und
- Fig. 12: einen vergrösserten Teilausschnitt des Fachwerks gemäss Fig. 1 (Ausschnitt D).

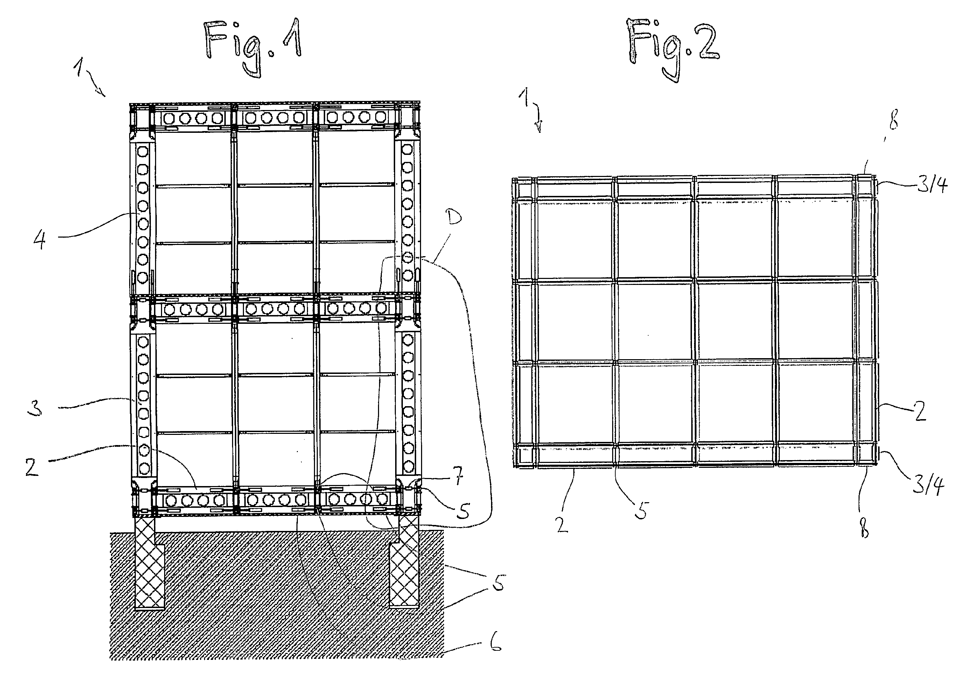

Wie in Fig. 1 dargestellt, enthält ein allgemein mit 1 bezeichnetes Fachwerk im Wesentlichen horizontal verlaufende Träger 2 und vertikal verlaufende Stützen 3 und 4. Ein derartiger Aufbau ist insbesondere für Gebäude wie beispielsweise mehrstöckige Häuser oder andere Gebäude geeignet. Andere Bauten sind aber auch vorstellbar. Als Träger und Stützen werden vorgefertigte Stäbe verwendet. Diese Stäbe sind mit Hilfe von lösbaren Befestigungsmitteln durch Verbindungsteile 5 miteinander verbunden. Dabei werden vorzugsweise Befestigungsschrauben verwendet. Diese können durch Montageöffnungen 6 und 7 jeweils in ein entsprechendes Loch eingeführt und mittels eines Montagewerkzeugs angezogen werden.

Wie aus Fig. 1 und Fig. 2 hervorgeht, ist das Fachwerk 1 grundsätzlich orthogonal aufgebaut. Selbstverständlich ist es denkbar, je nach Anwendungszweck einen anderen, etwa einen polygonalen Aufbau zu wählen. Das Fachwerk besteht im Wesentlichen aus den folgenden drei Komponenten: Stäbe 2 als Träger für Decken, Stäbe 3 oder 4 für Stützen sowie aus Verbindungsteilen 5, die jeweils in den Knoten angeordnet sind und die Stäbe miteinander verbinden. Zur Herstellung einer Aussenwand sind ferner noch Distanzelemente 8 vorzusehen.

Für ein einfach ausgebildetes Fachwerk 1 genügen demnach drei Arten von Stäben. Die Stäbe 2 für die Träger sind ersichtlicherweise alle gleich ausgebildet. Als Stützen kommen zwei verschiedene Ausführungen von Stäben zur Anwendung: beim Stab 3 sind beide Enden auf gleiche Weise ausgebildet; beim Stab 4 sind die Enden verschiedenartig ausgebildet, wobei eines der Enden in etwa einem Ende des Stabes 2 entspricht.

Ein Knoten aus Trägern 2 weist zwei Verbindungsteile 5 auf. Ein Knoten von Trägern 2 und Stützen 3 und/oder 4 weist hingegen vier Verbindungsteile 5 auf. Die Verbindungsteile 5 sind am Ende eines Stabes in einem Abstand zueinander angeordnet und jeweils einer Anschlagfläche des Stabes zugeordnet. Diese Anschlagfläche kann entweder eine Stirnfläche oder eine Flankenfläche sein. Diese Verbindungsteile 5 sind dabei vorzugsweise alle gleich ausgebildet.

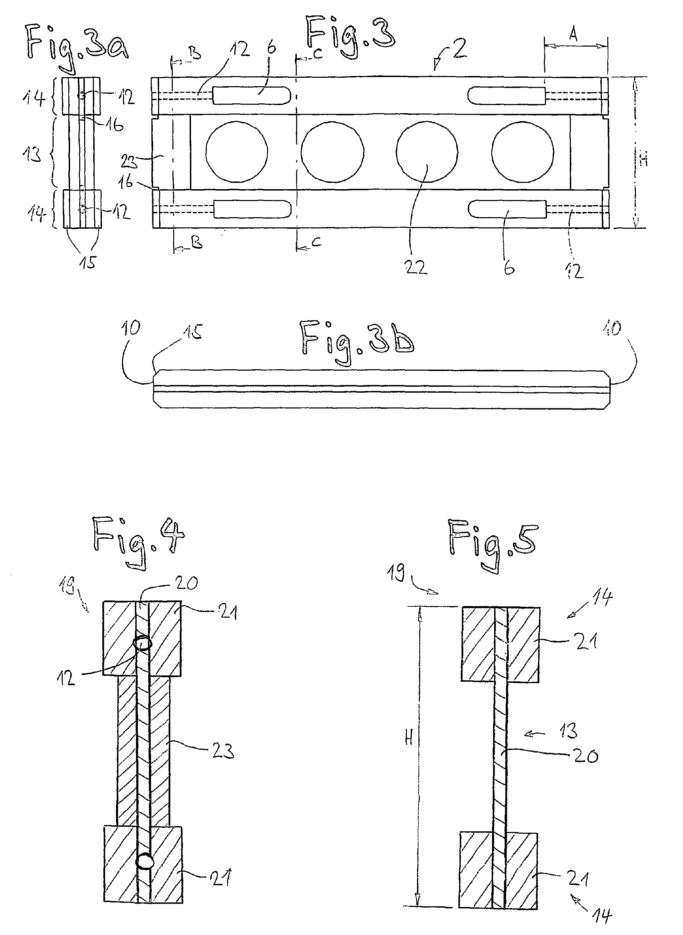

Die Fig. 3 zeigt einen Stab 2 für einen Träger. Dieser Stab 2 weist an jedem Ende zwei Durchgangsbohrungen 12 für Schrauben auf. An die Durchgangsbohrung 12 schliesst eine ebenfalls in Längsrichtung sich erstreckende Montageöffnung 6 an, durch die die Schraube einführbar und mittels eines Montagewerkzeugs anziehbar ist. Vorzugsweise ist dabei die Öffnung 6 durchgängig ausgestaltet.

Wie aus der Stirnansicht gemäss Fig. 3a des Stabes 2 hervorgeht, ist der Stab als I-förmiges Profil ausgestaltet. Jeweils mittig im Bereich der Gurte 14 sind die Durchgangsbohrungen 12 angeordnet. Wie aus Fig. 3b hervorgeht, ist der Stab auf jeder Seite auf Gehrung geschnitten. Neben den Gehrungsflächen 15 sind stirnseitig Stirnflächen 10 angeordnet, an welchen die Verbindungsteile zum Anschlag kommen. Wie Fig. 3 weiter zeigt, sind an beiden Enden zur Verstärkung Endstücke 23 angeordnet.

Die Fig. 4 und Fig. 5 zeigen den grundsätzlichen Aufbau eines Profils für einen Stab 2. Dieser Aufbau wird im Übrigen auch für die Stäbe für die Stützen verwendet. Wie aus Fig. 5 hervorgeht, besteht das Profil 19 im Wesentlichen aus einem sich über die gesamte Höhe H erstreckenden mittleren Brett 20 sowie aus Leisten 21, die im Bereich der Gurte 14 auf jeder Seite des Bretts 20 angeordnet sind. Um eine hohe mechanische Festigkeit und Belastbarkeit zu gewährleisten hat sich gezeigt, dass die Leisten 21 aus Eschenholz oder einem anderen geeigneten Massivholz und das Brett 20 aus Sperrholz besteht. Ein solches Profil zeichnet sich durch einfache und kostengünstige Herstellbarkeit aus. Selbstverständlich können auch andere Materialien gewählt werden. Das Profil 19 im Endbereich des Stabes weist zusätzlich die Endstücke 23 auf. Diese können - wie die Leisten 21 - aus Massivholz bestehen.

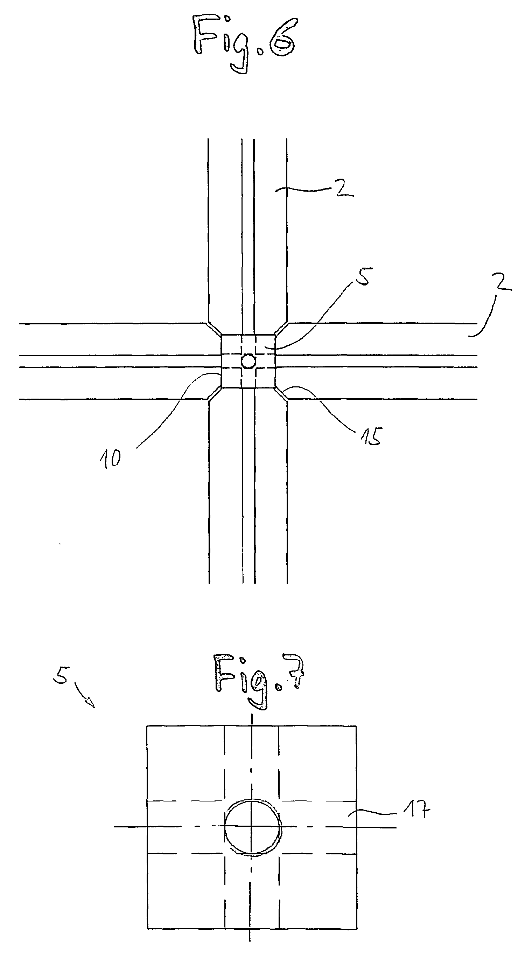

Die Fig. 6 zeigt einen Knoten aus Stäben 2 für Stützen. Ersichtlicherweise sind die Abmessungen des Verbindungsteils 5 den Stirnflächen 10 angepasst. Die Gehrung 15 bewirkt, dass verhältnismässig kleine Verbindungsteile 5 gewählt werden können.

Ein solches Verbindungsteil ist in Fig. 7 vergrössert dargestellt. Auf jeder Seite des Würfels ist eine Gewindebohrung 17 zur Aufnahme einer Schraube vorgesehen. Es besteht vorzugsweise aus Metall, besonders bevorzugt aus Stahl. Das Verbindungsteil 5 ist würfelförmig ausgebildet. Je nach Ausgestaltung der Stäbe können die Verbindungsteile auch quaderförmig ausgebildet sein. Für bestimmte Anwendungszwecke sind sogar in der Draufsicht polygonale Formen denkbar.

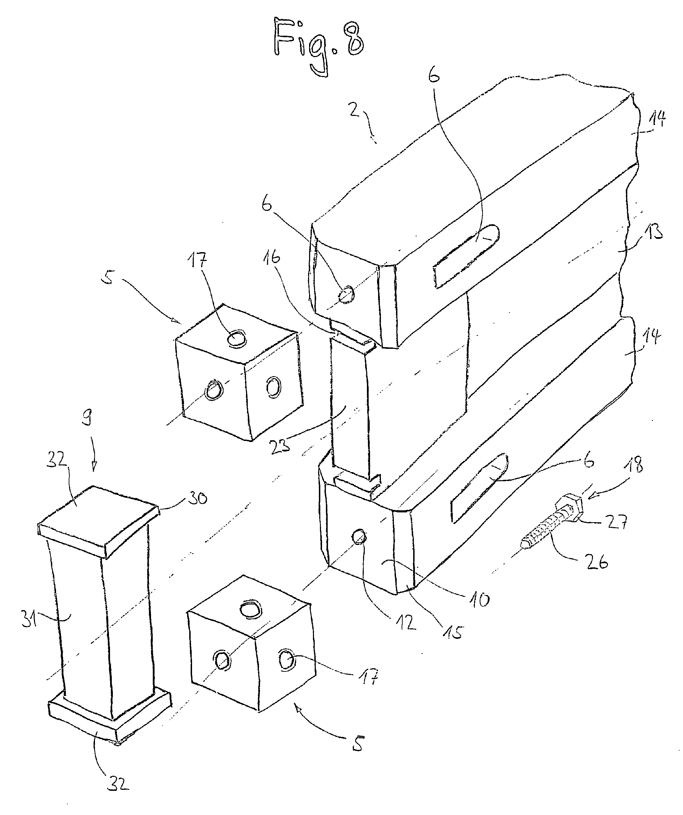

In Fig. 8 ist gezeigt, wie ein Knoten aufgebaut werden kann. Um einen Knoten aus Trägern zu bilden, werden an einen Stab an jeweils einem Ende zwei Verbindungsteile 5 im Bereich der Gurte 14 angeordnet. Die an die Stirnflächen 10 angelegten Verbindungsteile 5 werden mit Hilfe von Schrauben 18 stirnseitig an den Stab 2 befestigt. Vorteilhaft werden dazu gängige Schrauben 18 mit einem Schraubenschaft 26 und einem Schraubenkopf 27 verwendet. Um ein leichtes Einführen der Schrauben 18 zu gewährleisten, müssen die Länge und die Höhe der Montageöffnung der Schraube sowie den Montagewerkzeugen zum Anziehen der Schrauben angepasst werden.

Zwischen den Verbindungsteilen wird zusätzlich ein Versteifungselement 9, welches zur Aufnahme von Scherkräften vorgesehen ist, stirnseitig an die Stäbe 2 eingesetzt. Wie die Verbindungsteile 5 besteht auch das Versteifungselement 9 vorteilhaft aus Metall, insbesondere aus Stahl. Das Versteifungselement 9 enthält einen Grundkörper 31, an dessen Stirnseiten Platten 32 zur Bildung einer Schulter 30 angeordnet sind. Diese Schultern 30 sind in korrespondierende Aussparungen 16 am Ende des Stabes 2 aufnehmbar.

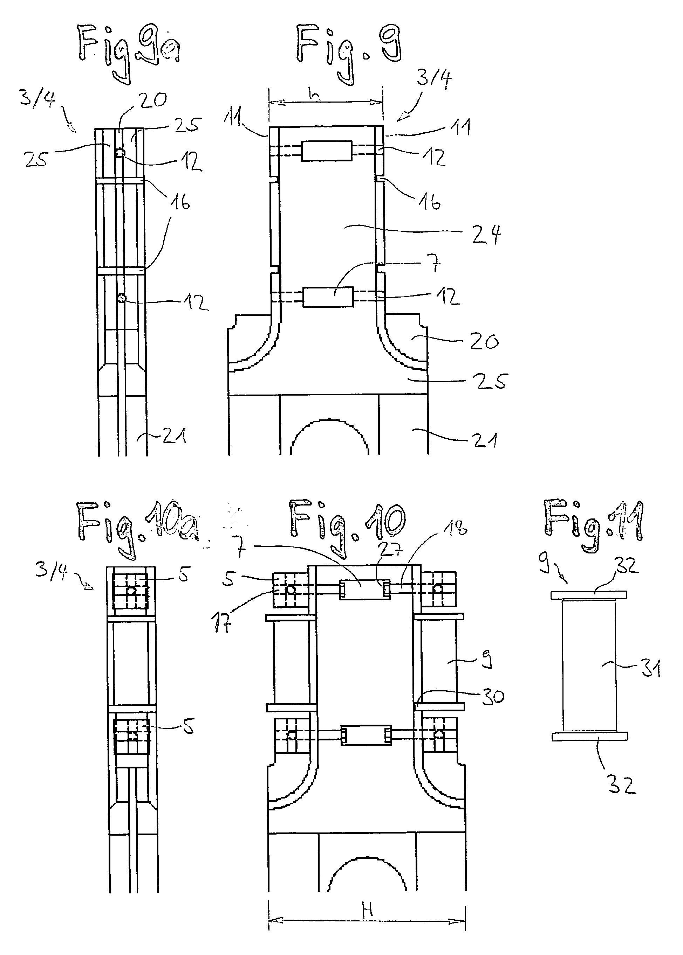

Wie aus den Fig. 9 bis 10a hervorgeht, ist ein Knoten für den Anschluss einer Stütze im Wesentlichen gleichartig - wie vorhergehend beschrieben - aufgebaut. Im Unterschied zu einem Knoten nur aus Trägern weist ein Knoten von Trägern und Stützen jedoch vier Verbindungsteile 5 sowie entsprechend zwei Versteifungselemente 9 auf (vgl. z.B. Fig. 10).

Ein Stab 3 bzw. 4 weist wenigstens ein Ende auf, das gegenüber der schmalen Längsseite nach innen versetzte Flankenflächen 11 hat. Diese Flankenflächen 11 dienen als Anschlagflächen für die Verbindungsteile 5. Die Durchgangsbohrungen 12 sowie die Montageöffnungen 7 verlaufen demzufolge quer zur Längsrichtung. Durch dieses Nach-Innen-Versetzen weist ein Endbereich des Stabes 3 bzw. 4 eine Höhe h auf, die kleiner als die gesamte Höhe ist. Dabei ist die Höhe h derart zu wählen, dass die angelegten Verbindungsteile nicht über die Umrisslinien des Stabes hinausragen (H - h entspricht also ungefähr Seitenlänge des Würfels 5).

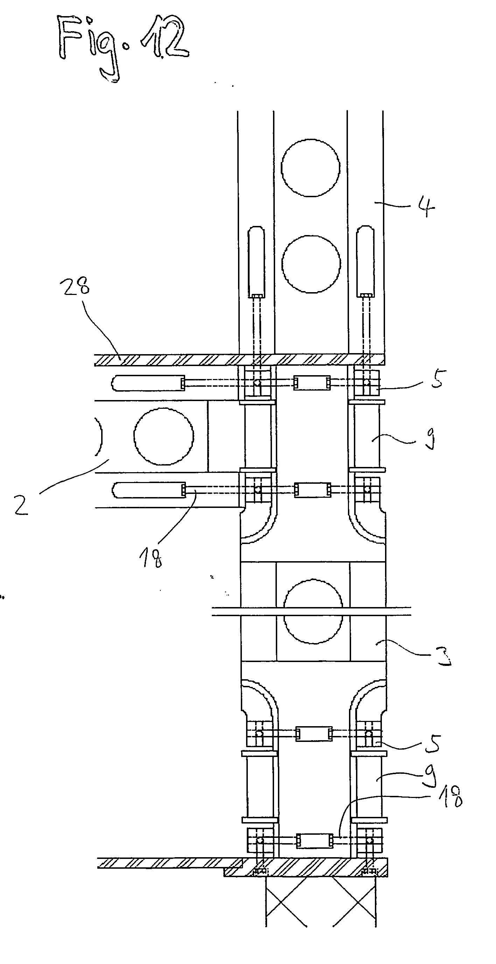

Die Fig. 12 verdeutlicht nochmals, dass für ein Fachwerk grundsätzlich nur drei Typen von Stäben verwendet werden müssen. Für Träger werden Stäbe 2, für Stützen Stäbe 3 und 4 verwendet. Auf den Trägern können Deckenelemente 28 angeordnet werden. Die genaue Ausgestaltung derartiger Stäbe wurde bereits vorgängig genau beschrieben. Der Stab 3 für die untere Stütze 3 weist an beiden Enden quer verlaufende Montageöffnungen und Durchgangsbohrungen für Schrauben 18 auf. Eine solche Anordnung wurde vorgängig anhand der Fig. 9 - 10a beschrieben. Der Stab 4 für die obere Stütze weist am unteren Ende in Längsrichtung des Stabes verlaufende Durchgangsöffnungen und Montageöffnungen auf. Das Ende des Stabes 4 ist gleich wie das Ende des Stabes 2 ausgestaltet. Diese Anordnung wurde bereits anhand der Fig. 3 eingehend beschrieben. Das obere (nicht sichtbare) Ende des Stabes 4 wäre gleich wie die Enden des Stabes 3 ausgestaltet.

## Patentansprüche

1. Fachwerk (1) für Bauten, insbesondere für Gebäude, enthaltend Stäbe (2, 3, 4) aus Holz und/oder Holzfaserwerkstoffen sowie die Stäbe mit Hilfe von Schrauben (18) verbindenden würfelförmigen Verbindungsteile (5) aus Metall, wodurch Knoten gebildet werden, wobei die Stäbe (2, 3, 4) vertikal verlaufende Stützen (3, 4) und horizontal verlaufende Träger (2) bilden, **dadurch gekennzeichnet, dass** die Stäbe (2, 3, 4) im Querschnitt I-förmige Profile (19) mit einem Steg (13) und zwei Gurten (14) sind, dass ein Knoten wenigstens zwei in einem Abstand zueinander angeordnete Verbindungsteile (5) aufweist, wobei diese jeweils einer am Ende des Stabes angeordneten Anschlagfläche (10, 11) zugeordnet sind und an diese anschlagen, wobei die Anschlagfläche für die Verbindungsteile (5) der als Träger vorgesehenen Stäbe (2) eine rechtwinklig zur Längsrichtung des Stabes verlaufende Stirnfläche (10) und die Anschlagfläche für die Verbindungsteile (5) der als Stützen vorgesehenen Stäbe (3, 4) eine in Längsrichtung des Stabes verlaufende ebene Flankenfläche (11) im Bereich wenigstens eines Endes des Stabes ist und dass ein Knoten aus Trägern (2) zwei Verbindungsteile (5) aufweist, wobei jeweils im Bereich des Gurtes (14) je ein Verbindungsteil (5) positioniert ist.

2. Fachwerk nach Anspruch 1, **dadurch gekennzeichnet, dass** im Bereich der Enden des Stabes (2, 3, 4) für die Schrauben (18) Montageöffnungen (6, 7) vorgesehen sind, die in einem Abstand von der Anschlagfläche (10, 11) angeordnet sind, wobei die Schrauben durch die Montageöffnung (6, 7) einführbar und mittels eines Montagewerkzeugs anziehbar sind.

3. Fachwerk nach Anspruch 1 oder 2, **dadurch gekennzeichnet, dass** die Schrauben (18) einen Schraubenschaft (26) und einen Schraubenkopf (27) aufweisen.

4. Fachwerk nach Anspruch 2 und 3, **dadurch gekennzeichnet, dass** zwischen Anschlagfläche (10, 11) und jeweils einer Montageöffnung (6, 7) eine Durchgangsbohrung (12) zur Aufnahme des Schraubenschafts (26) der Schraube (18) angeordnet ist und dass die Montageöffnung (6, 7) eine in Richtung der Durchgangsbohrung (12) verlaufende längliche Aussparung ist.

5. Fachwerk nach einem der Ansprüche 1 bis 4, **dadurch gekennzeichnet, dass** ein Knoten von Trägern (2) und Stützen (3, 4) vier Verbindungsteile (5) aufweist, wobei jeweils zwei Verbindurigsteile (5) an je einer der beiden Flankenflächen (11) der Stäbe (2, 3, 4) für die Stützen (3, 4) angeordnet sind.

6. Fachwerk nach einem der Ansprüche 1 bis 5, **dadurch gekennzeichnet, dass** auf jeder Seite des Verbindungsteils (5) eine Gewindebohrung (17) zur Aufnahme einer Schraube (18) vorgesehen ist.

7. Fachwerk nach einem der Ansprüche 1 bis 6, **dadurch gekennzeichnet, dass** zwischen zwei Verbindungsteilen (5) ein Versteifungselement (9) vorgesehen ist.

8. Fachwerk nach Anspruch 7, **dadurch gekennzeichnet, dass** das Versteifungselement (9) wenigstens eine umlaufende Schulter (30) aufweist, die formschlüssig in eine korrespondierende Aussparung (16) in den Stäben (2, 3, 4) des Knotens eingreift.

9. Fachwerk nach Anspruch 8, **dadurch gekennzeichnet, dass** das Versteifungselement (9) einen quaderförmigen Grundkörper (31) und zur Bildung von Schultern (30) für den Formschluss mit den Stäben (2, 3, 4) zwei Platten (32) aufweist, die stirnseitig am Grundkörper angeordnet sind, wobei die Platten (32) und/oder der Grundkörper (31) in der Draufsicht quadratisch ausgebildet sind bzw. ist.

10. Fachwerk nach einem der Ansprüche 1 bis 9, **dadurch gekennzeichnet, dass** im Bereich der Enden des Stabes (2, 3, 4) zwei in einem Abstand zueinander angeordnete und achsparallel verlaufende Durchgangsbohrungen (12) vorgesehen sind, an welchen Montageöffnungen (6, 7) für Schrauben (18) zur Herstellung von Knoten des Fachwerks anschliessen, wobei die Durchgangsbohrungen (12) und vorzugsweise auch die als längliche Aussparungen ausgestalteten Montageöffnungen (6) senkrecht zu den Anschlagflächen (10, 11) für ein Verbindungsteil (5) verlaufen.

11. Fachwerk nach Anspruch 10, **dadurch gekennzeichnet, dass** ein Stab entweder Durchgangsbohrungen (12) und zugehörige Montageöffnungen (6, 7) aufweist, die in Längsrichtung verlaufen und die jeweils einem Gurt (14) zugeordnet sind, wodurch er einen Träger (2) bildet, oder dass die Durchgangsbohrungen (12) und zugehörige Montageöffnungen (6, 7) an wenigstens einem Ende der Stäbe (3, 4) quer zur Längsrichtung verlaufen, wodurch er eine Stütze bildet.

12. Fachwerk nach einem der Ansprüche 1 bis 11, **dadurch gekennzeichnet, dass** das Profil (19) ein sich über die gesamte Höhe (H) erstreckendes Brett (20) aufweist, das eine mittlere Schicht des Profils bildet.

13. Fachwerk nach einem der Ansprüche 1 bis 12, **dadurch gekennzeichnet, dass** zur Bildung des I-förmigen Profils (19) im Bereich der Gurte (14) auf jeder Seite eines sich über die gesagte Höhe (H) erstreckenden mittleren Bretts (20) wenigstens eine Leiste (21) angeordnet ist.

14. Fachwerk nach Anspruch 12 oder 13, **dadurch gekennzeichnet, dass** das Brett (20) aus Sperrholz oder aus Schichtholz besteht und die Leisten (21) aus Massivholz, insbesondere aus Eschenholz bestehen.

15. Fachwerk nach einem der Ansprüche 1 bis 14, **dadurch gekennzeichnet, dass** das Ende eines Stabs (2, 3, 4) in der Draufsicht auf jeder Seite eine Gehrungsfläche (15) aufweist.

16. Fachwerk nach einem der Ansprüche 1 bis 15, **dadurch gekennzeichnet, dass** zur Gewichtsreduktion im Bereich des Stegs (13) vorzugsweise kreisförmige Durchbrüche (22) vorgesehen sind, die in einer in Längsrichtung verlaufenden Reihe angeordnet sind.

## Claims

1. Framework (1) for structures, in particular for buildings, containing rods (2, 3, 4) made from wood and/or wood fibre materials, and also cuboid connecting parts (5) made from metal which connect the rods with the aid of screws (18), with the result that nodes are formed, the rods (2, 3, 4) forming vertically running supports (3, 4) and horizontally running bearers (2), **characterized in that** the rods (2, 3, 4) are profiles (19) of I-shaped cross section, with a web (13) and with two booms (14), **in that** a node has at least two connecting parts (5) arranged at a distance from one another, these being assigned in each case to an abutment face (10, 11) which are arranged at the end of the rod, and butting against the said abutment face, the abutment face for the connecting parts (5) of the rods (2) provided as bearers being an end face (10) which runs at right angles with respect to the longitudinal direction of the rod, and the abutment face for the connecting parts (5) of the rods (3, 4) provided as supports being a plane flank face (11), running in the longitudinal direction of the rod, in the region of at least one end of the rod, and **in that** a node composed of bearers (2) has two connecting parts (5), a connecting part (5) being positioned in each case in the region of the boom (14).

2. Framework according to Claim 1, **characterized in that**, in the region of the ends of the rod (2, 3, 4), mounting orifices (6, 7) for the screws (18) are provided, which are arranged at a distance from the abutment face (10, 11), the screws being capable of being introduced through the mounting orifice (6, 7) and of being tightened by means of a mounting tool.

3. Framework according to Claim 1 or 2, **characterized in that** the screws (18) have a screw shank (26) and a screw head (27).

4. Framework according to Claim 2 and 3, **characterized in that** a through-bore (12) for receiving the screw shank (26) of the screw (18) is arranged between the abutment face (10, 11) and in each case a mounting orifice (6, 7), and **in that** the mounting orifice (6, 7) is an elongate clearance running in the direction of the through-bore (12).

5. Framework according to one of Claims 1 to 4, **characterized in that** a node of bearers (2) and of supports (3, 4) has four connecting parts (5), in each case two connecting parts (5) being arranged in each case on one of the two flank faces (11) of the rods (2, 3, 4) for the supports (3, 4).

6. Framework according to one of Claims 1 to 5, **characterized in that** a threaded bore (17) for receiving a screw (18) is provided on each side of the connecting part (5).

7. Framework according to one of Claims 1 to 6, **characterized in that** a stiffening element (9) is provided between two connecting parts (5).

8. Framework according to Claim 7, **characterized in that** the stiffening element (9) has at least one continuous shoulder (30) which engages positively into a matching clearance (16) in the rods (2, 3, 4) of the node.

9. Framework according to Claim 8, **characterized in that** the stiffening element (9) has a parallelipipedic basic body (31) and, to form shoulders (30) for the positive connection to the rods (2, 3, 4), two plates (32) which are arranged on the end face of the basic body, the plates (32) and/or the basic body (31) being of square design, as seen in a top view.

10. Framework according to one of Claims 1 to 9, **characterized in that**, in the region of the ends of the rod (2, 3, 4), two through-bores (12) are provided which are arranged at a distance from one another and run axially parallel and which have adjoining them mounting orifices (6, 7) for screws (18) for the production of nodes of the framework, the through-bores (12) and preferably also the mounting orifices (6) configured as elongate clearances running perpendicularly with respect to the abutment faces (10, 11) for a connecting part (5).

11. Framework according to Claim 10, **characterized** either in that either a rod has through-bores (12) and associated mounting orifices (6, 7) which run in the longitudinal direction and which are assigned in each case to a boom (14), with the result that it forms a bearer (2), or in that the through-bores (12) and associated mounting orifices (6, 7) at at least one end of the rods (3, 4) run transversally with respect to the longitudinal direction, with the result that it forms a support.

12. Framework according to one of Claims 1 to 11, **characterized in that** the profile (19) has a board (20) which extends over the entire height (H) and which forms a middle layer of the profile.

13. Framework according to one of Claims 1 to 12, **characterized in that**, to form the I-shaped profile (19), at least one batten (21) is arranged in the region of the booms (14) on each side of a middle board (20) extending over the entire height (H).

14. Framework according to Claim 12 or 13, **characterized in that** the board (20) consists of plywood or of laminated wood, and the battens (21) consist of solid wood, in particular of ash wood.

15. Framework according to one of Claims 1 to 14, **characterized in that** the end of a rod (2, 3, 4) has a mitre face (15) on each side, as seen in a top view.

16. Framework according to one of Claims 1 to 15, **characterized in that**, to reduce the weight in the region of the web (13), preferably circular perforations (22) are provided which are arranged in a row running in the longitudinal direction.

## Revendications

1. Treillis (1) pour des constructions, en particulier pour des bâtiments, comprenant des tiges (2, 3, 4) en bois et/ou en matériaux de fibre de bois ainsi que des pièces de liaison en métal (5) en forme de cube reliant les tiges à l'aide de vis (18), formant ainsi des noeuds, dans lequel les tiges (2, 3, 4) forment des appuis (3, 4) orientés verticalement et des supports (2) orientés horizontalement, **caractérisé en ce que** les tiges (2, 3, 4) sont des profilés (19) à section transversale en forme de I avec une âme (13) et deux ailes (14), **en ce qu'**un noeud présente au moins deux pièces de liaison (5) disposées à distance l'une de l'autre, dans lequel celles-ci sont chaque fois associées à une face de butée (10, 11) disposée à l'extrémité des tiges et sont appliquées contre celle-ci, dans lequel la face de butée pour les pièces de butée (5) des tiges (2) prévues comme supports est une face frontale orientée perpendiculairement à la direction longitudinale de la tige et la face de butée (10) pour les pièces de liaison (5) des tiges (3, 4) prévues comme appuis est une face de flanc plane (11) orientée dans la direction longitudinale de la tige dans la région d'au moins une extrémité de la tige et **en ce qu'**un noeud de supports (2) présente deux pièces de liaison (5), dans lequel une pièce de liaison (5) est chaque fois positionnée dans la région de l'aile (14).

2. Treillis selon la revendication 1, **caractérisé en ce qu'**il est prévu dans la région des extrémités de la tige (2, 3, 4) des ouvertures de montage (6, 7) pour les vis (18), qui sont disposées à distance de la face de butée (10, 11), dans lequel les vis peuvent être introduites à travers l'ouverture de montage (6, 7) et peuvent être vissées au moyen d'un outil de montage.

3. Treillis selon la revendication 1 ou 2, **caractérisé en ce que** les vis (18) présentent une tige de vis (26) et une tête de vis (27).

4. Treillis selon la revendication 2 et 3, **caractérisé en ce qu'**un perçage traversant (12) destiné à recevoir la tige de vis (26) de la vis (18), est disposé entre la face de butée (10, 11) et chaque fois une ouverture de montage (6, 7) et **en ce que** l'ouverture de montage (6, 7) est une découpe allongée orientée dans la direction du perçage traversant (12).

5. Treillis selon l'une quelconque des revendications 1 à 4, **caractérisé en ce qu'**un noeud de supports (2) et d'appuis (3, 4) présente quatre pièces de liaison (5), dans lequel chaque fois deux pièces de liaison (5) sont disposées respectivement sur une des deux faces de flanc (11) des tiges (2, 3, 4) pour les appuis (3, 4).

6. Treillis selon l'une quelconque des revendications 1 à 5, **caractérisé en ce qu'**il est prévu sur chaque côté de la pièce de liaison (5) un trou fileté (17) destiné à recevoir une vis (18).

7. Treillis selon l'une quelconque des revendications 1 à 6, **caractérisé en ce qu'**il est prévu un élément de renforcement (9) entre deux pièces de liaison (5).

8. Treillis selon la revendication 7, **caractérisé en ce que** l'élément de renforcement (9) présente au moins un épaulement périphérique (30), qui s'engage en complémentarité de forme dans une découpe correspondante (16) dans les tiges (2, 3, 4) du noeud.

9. Treillis selon la revendication 8, **caractérisé en ce que** l'élément de renforcement (9) comprend un corps de base parallélépipédique (31) et deux plaques (32), destinées à former des épaulements (30) pour l'assemblage par complémentarité de forme avec les tiges (2, 3, 4), qui sont disposées du côté frontal sur le corps de base, dans lequel les plaques (32) et/ou le corps de base (31) est/sont de forme carrée dans une vue en plan.

10. Treillis selon l'une quelconque des revendications 1 à 9, **caractérisé en ce qu'**il est prévu dans la région des extrémités de la tige (2, 3, 4) deux perçages traversants (12) d'axes parallèles et disposés à distance l'un de l'autre, auxquels se raccordent des ouvertures de montage (6, 7) pour des vis (18) permettant de réaliser des noeuds du treillis, dans lequel les perçages traversants (12) et de préférence aussi les ouvertures de montage (6) en forme de découpes allongées s'étendent perpendiculairement aux faces de butée (10, 11) pour une pièce de liaison (5).

11. Treillis selon la revendication 10, **caractérisé** soit en ce qu'une tige présente des perçages traversants (12) et des ouvertures de montage correspondantes (6, 7), qui s'étendent en direction longitudinale et qui sont chaque fois associées à une aile (14), formant ainsi un support (2), soit en ce que les perçages traversants (12) et des ouvertures de montage correspondantes (6, 7) s'étendent transversalement à la direction longitudinale à au moins une extrémité des tiges (3, 4), formant ainsi un appui.

12. Treillis selon l'une quelconque des revendications 1 à 11, **caractérisé en ce que** le profilé (19) présente une planche (20) s'étendant sur toute la hauteur (H), qui forme une couche médiane du profilé.

13. Treillis selon l'une quelconque des revendications 1 à 12, **caractérisé en ce qu'**au moins une latte (21) est disposée sur chaque côté d'une planche médiane (20) s'étendant sur toute la hauteur (H), dans la région des ailes (14), pour former le profilé en forme de 1 (19).

14. Treillis selon l'une quelconque des revendications 12 ou 13, **caractérisé en ce que** la planche (20) se compose de contreplaqué ou de bois lamellé et les lattes (21) se composent de bois massif, en particulier de bois de frêne.

15. Treillis selon l'une quelconque des revendications 1 à 14, **caractérisé en ce que** l'extrémité des tiges (2, 3, 4) présente sur chaque côté une face à onglets (15) dans la vue en plan.

16. Treillis selon l'une quelconque des revendications 1 à 15, **caractérisé en ce qu'**il est prévu dans la région de l'âme (13), pour réduire le poids, des découpes de préférence circulaires (22), qui sont disposées en une rangée s'étendant dans la direction longitudinale.
